# EUROPEAN PATENT APPLICATION

(11) **EP 4 651 252 A1**
(43) Date of publication of application: **19.11.2025**
(21) Application number: 25176555.8
(22) Date of filing: 15.05.2025
(51) Int. Cl.: H01M 10/052, H01M 50/109, H01M 50/153, H01M 50/181, H01M 50/533, H01M 50/545, H01M 50/586, H01M 50/636, H01M 50/645

(54) **BATTERY CELL AND ELECTRICAL DEVICE**

(30) Priority: 16.05.2024 CN 202410612685
(71) Applicant: Ningde Amperex Technology Ltd., Ningde City, Fujian Province 352100 (CN)
(72) Inventor: WANG, Yang, Ningde City, Fujian Province, China, 352100 (CN); WANG, Zhongyi, Ningde City, Fujian Province, China, 352100 (CN)
(74) Representative: Icosa

(57) **Abstract**

This application provides a battery cell (10) and an electrical device. The battery cell (10) includes a housing (100), an electrode assembly (200), a housing cover (300), a first insulation piece (400), and an electrode post (500). The electrode assembly (200) is accommodated in the housing (100). The housing cover (300) is connected to the housing (100). The housing cover (300) is provided with a first through-hole (310). A first tab (210) of the electrode assembly (200) is electrically connected to the housing cover (300). The first insulation piece (400) is disposed on one side of the housing cover (300), the side facing away from the electrode assembly (200). The first insulation piece (400) is provided with a second through-hole (410). The electrode post (500) includes a body (510) and a protruding portion (520). The body (510) is sheet-shaped and disposed on one side of the first insulation piece (400), the side facing away from the housing cover (300). The protruding portion (520) runs through the first through-hole (310) and the second through-hole (410) and is electrically connected to a second tab (220) of the electrode assembly (200). In this way, the first through-hole (310) can be used as an injection hole for injecting an electrolyte solution. After completion of the injection, the electrode post (500) can seal the first through-hole (310), so that the shell of the battery cell (10) does not need to be provided with an additional injection hole, thereby saving space reserved for injection inside the shell of the battery cell (10). In addition, no injection plug is required, so that the overall space occupied by the battery cell (10) is smaller, and the energy density of the battery cell (10) is higher.

## Description

### TECHNICAL FIELD

This application relates to the technical field of batteries, and in particular, to a battery cell and an electrical device.

### BACKGROUND

With the rapid development of electronic information technology, various electronic devices are evolving toward intelligence and versatility, thereby placing increasingly higher requirements on the energy density of batteries.

Currently, an electrode post of a battery cell typically includes a main body and a protruding portion. The main body is disposed inside a shell of the battery cell, and the protruding portion runs through a through-hole in the shell of the battery cell to connect to a load. After the shell of the battery cell is assembled, the through-hole is in a sealed state. Consequently, an injection hole and an injection plug need to be additionally provided on the shell of the battery cell. In the internal space of the shell of the battery cell, space for injecting an electrolyte solution needs to be reserved at a position corresponding to the injection hole. In addition, the injection plug protrudes from the shell of the battery cell. Both factors mentioned above reduce the energy density of the battery cell.

### SUMMARY

This application provides a battery cell and an electrical device to increase the energy density of the battery cell.

According to a first aspect, this application provides a battery cell. The battery cell includes a housing, an electrode assembly, a housing cover, a first insulation piece, and an electrode post. The housing is provided with a first opening. The electrode assembly is accommodated in the housing. The electrode assembly includes a first tab and a second tab of opposite polarities. The housing cover is disposed at the first opening and connected to the housing. The housing cover is provided with a first through-hole. The first tab is electrically connected to the housing cover. The first through-hole is an injection hole. The first insulation piece is disposed on one side of the housing cover, the side facing away from the electrode assembly. The first insulation piece is provided with a second through-hole. The electrode post includes a body and a protruding portion. The body is disposed on one side of the first insulation piece, the side facing away from the housing cover. The protruding portion protrudes from one side of the body, the side facing the housing cover. The protruding portion runs through the first through-hole and the second through-hole and is electrically connected to the second tab.

In the above technical solution, by disposing the first insulation piece on one side of the housing cover, the side facing away from the electrode assembly, this application implements insulation between the electrode post and the housing cover, and reduces the possibility of short-circuiting in the battery cell. By disposing the body of the electrode post on one side of the first insulation piece, the side facing away from the housing cover, this application enables the first through-hole of the housing cover to connect the interior and the exterior of the battery cell after the housing and the housing cover are assembled to form a shell of the battery cell. In this way, the first through-hole can be used as an injection hole for injecting an electrolyte solution. After completion of the injection, the electrode post can seal the first through-hole, so that the shell of the battery cell does not need to be provided with an additional injection hole, thereby saving space reserved for injection inside the shell of the battery cell. In addition, no injection plug is required, so that the overall space occupied by the battery cell is smaller, and the energy density of the battery cell is higher. By electrically connecting the first tab to the housing cover, this application enables the protruding portion of the electrode post to run through the first through-hole and the second through-hole and to get electrically connected to the second tab. In this way, a load can be electrically connected to the battery cell through the housing cover and the electrode post, thereby making it convenient for the battery cell to provide electrical energy for the load.

In some embodiments of this application, a melting point of the first insulation piece is T, satisfying: 100 °C ≤ T ≤ 400 °C. The first insulation piece is meltable or debondable by heat to form a pressure relief channel connecting the interior and the exterior of the battery cell.

In the above technical solution, when T is greater than or equal to 100 °C, the insulation reliability of the first insulation piece to the housing cover and the electrode post is made relatively high. When T is less than or equal to 400 °C, the first insulation piece is meltable or debondable to form a pressure relief channel connecting the interior and the exterior of the battery cell when the battery cell is thermally runaway. In this way, the pressure relief sensitivity of the battery cell is relatively high. Therefore, when T is 100 °C to 400 °C, not only the insulation reliability of the first insulation piece to the housing cover and the electrode post is relatively high, but also the pressure relief sensitivity of the battery cell is relatively high. The battery cell is depressurized through the structure formed of the housing cover, the first insulation piece, and the electrode post. In this way, no additional pressure relief structure needs to be disposed on the shell of the battery cell, thereby reducing the difficulty and cost of preparing the battery cell.

In some embodiments of this application, a groove is formed on one side of the housing cover, the side facing away from the housing. The first through-hole runs through a bottom wall of the groove. At least a part of the first insulation piece is disposed in the groove along the direction of the central axis of the first through-hole.

In the above technical solution, at least a part of the first insulation piece is disposed in the groove along the direction of the central axis of the first through-hole, thereby reducing the overall thickness of the housing cover, the first insulation piece, and the electrode post, and in turn, reducing the overall space occupied by the housing cover, the first insulation piece, and the electrode post, and increasing the energy density of the battery cell.

In some embodiments of this application, a groove is formed on one side of the housing cover, the side facing away from the housing. The first through-hole runs through a bottom wall of the groove. At least a part of the body is disposed in the groove along the direction of the central axis of the first through-hole.

In the above technical solution, at least a part of the body is disposed in the groove along the direction of the central axis of the first through-hole, thereby further reducing the overall thickness of the housing cover, the first insulation piece, and the electrode post, and in turn, further reducing the overall space occupied by the housing cover, the first insulation piece, and the electrode post, and further increasing the energy density of the battery cell.

In some embodiments of this application, along a thickness direction of the housing cover, a projection of the first insulation piece and a projection of the body fall in the groove.

In the above technical solution, along the thickness direction of the housing cover, the projection of the first insulation piece and the projection of the body fall in the groove. In this way, the first insulation piece or the body is entirely disposed in the groove, thereby further reducing the overall thickness of the housing cover, the first insulation piece, and the electrode post, and in turn, further reducing the overall space occupied by the housing cover, the first insulation piece, and the electrode post, and further increasing the energy density of the battery cell.

In some embodiments of this application, the diameter of the first through-hole is D1, the diameter of the second through-hole is D2, and the diameter of the protruding portion is D3, satisfying: D1 > D3, and D2 ≥ D3.

In the above technical solution, the diameter D1 of the first through-hole, the diameter D2 of the second through-hole, and the diameter D3 of the protruding portion satisfy D1 > D3 and D2 ≥ D3. In this way, the protruding portion can run through the first through-hole and the second through-hole to get electrically connected to the second tab. This arrangement also reduces the possibility of short-circuiting caused by contact between the protruding portion and the housing cover, thereby improving the safety of the battery cell.

In some embodiments of this application, D1 > D2.

In the above technical solution, by making D1 greater than D2, this application further reduces the possibility of short-circuiting caused by contact between the protruding portion and the housing cover, thereby improving the safety of the battery cell.

In some embodiments of this application, the first insulation piece extends beyond an edge of the body along a direction perpendicular to the central axis of the first through-hole.

In the above technical solution, the first insulation piece extends beyond the edge of the body along the direction perpendicular to the central axis of the first through-hole, thereby more effectively implementing insulation between the electrode post and the housing cover, reducing the possibility of short-circuiting between the electrode post and the housing cover, and improving the safety of the battery cell.

In some embodiments of this application, the battery cell further includes an adapter piece. The adapter piece is disposed on one side of the housing cover, the side facing the electrode assembly. The outer periphery of the adapter piece is connected to the housing. The adapter piece is provided with a third through-hole. The protruding portion runs through the first through-hole, the second through-hole, and the third through-hole. The first tab is electrically connected to the housing cover by the adapter piece.

In the above technical solution, the outer periphery of the adapter piece is connected to the housing. Therefore, after the adapter piece is connected to the housing, the adapter piece can cover a part of the first opening, and an electrolyte solution can be injected into the housing through the third through-hole of the adapter piece. The adapter piece can reduce the possibility of the electrolyte solution splashing out of the housing. In addition, this arrangement facilitates the connection between the first tab and the adapter piece, and enables the abutment between the adapter piece and the housing cover to implement electrical connection between the first tab and the housing cover.

In some embodiments of this application, the body is sheet-shaped, and the adapter piece assumes an annular sheet shape.

In the above technical solution, the body is sheet-shaped, and the adapter piece is in the annular sheet shape, thereby facilitating the connection between the adapter piece and the housing, and facilitating electrolyte injection into the housing from the third through-hole of the adapter piece.

In some embodiments of this application, the battery cell further includes a second insulation piece. At least a part of the second insulation piece is disposed between the adapter piece and the first tab. Along a thickness direction of the housing cover, the thickness of the protruding portion is H1, the thickness of the housing cover is H2, the thickness of the first insulation piece is H3, the thickness of the adapter piece is H4, and the thickness of the second insulation piece is H5, satisfying: H1 ≥ H2 + H3 + H4 + H5.

In the above technical solution, a second insulation piece is disposed, and at least a part of the second insulation piece is disposed between the adapter piece and the first tab, thereby reducing the possibility of contact and short-circuiting between the adapter piece and the first tab, and improving the safety of the battery cell.

Because the first tab is prone to deform, if the first tab is made to pass through the adapter piece and the housing cover, the first tab is prone to contact the adapter piece and the housing cover to cause a short circuit, thereby increasing the risk of thermal runaway of the battery cell. By making the thickness H1 of the protruding portion, the thickness H2 of the housing cover, the thickness H3 of the first insulation piece, the thickness H4 of the adapter piece, and the thickness H5 of the second insulation piece satisfy H1 ≥ H2 + H3 + H4 + H5 along the thickness direction of the housing cover, this application enables the protruding portion to pass through the housing cover, the first insulation piece, the adapter piece, and the second insulation piece, and to get connected to the first tab. In this way, the protruding portion is not prone to deform, thereby reducing the possibility of short-circuiting and thermal runaway of the battery cell, and improving the safety of the battery cell.

In some embodiments of this application, the electrode assembly further includes a main body. The first tab and the second tab are disposed on one side of the main body and connected to the main body, the side facing the housing cover.

In the above technical solution, with the first tab and the second tab positioned on the same side of the main body, a space just needs to be reserved between one side of the main body and the housing cover to accommodate the first tab and the second tab. Compared with the practice of disposing the first tab and the second tab on different sides, the technical solution hereof can reduce the space occupied by the first tab and the second tab, and improve the utilization rate of the accommodation space formed by the housing and the housing cover, thereby increasing the energy density of the battery cell. For a jelly-roll battery cell, after the electrode assembly is mounted in the housing, a center pin needs to be passed through the middle of the battery cell to connect the first tab and the bottom wall of the housing together. In this application, both the first tab and the second tab are disposed on one side of the main body, the side facing the housing cover. Therefore, there is no need to reserve a space for accommodating the center pin, thereby further improving the utilization rate of the accommodation space formed by the housing and the housing cover, and in turn, further increasing the energy density of the battery cell.

In some embodiments of this application, a recessed portion is formed on one side of the electrode post at a position corresponding to the protruding portion, the side facing away from the housing cover.

In the above technical solution, by forming a recessed portion on one side of the electrode post at the position corresponding to the protruding portion, the side facing away from the housing cover, this application enables the protruding portion of the electrode post to be manufactured directly by stamping or other means, thereby improving the efficiency of preparing the battery cell.

In some embodiments of this application, the housing cover is circular, and the battery cell is cylindrical.

In the above technical solution, the battery cell is cylindrical and can be suitable for a cylindrical battery compartment that is smaller in size.

According to a second aspect, this application provides an electrical device. The electrical device includes the battery cell disclosed above. The battery cell is configured to provide electrical energy.

### BRIEF DESCRIPTION OF DRAWINGS

To describe technical solutions in some embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a three-dimensional schematic structural diagram of a battery cell according to some embodiments of this application;
FIG. 2 is a schematic structural exploded view of a battery cell according to some embodiments of this application;
FIG. 3 is a schematic cross-sectional view of a partial structure of a battery cell according to some embodiments of this application;
FIG. 4 is a three-dimensional schematic diagram of a partial structure of a battery cell according to some other embodiments of this application;
FIG. 5 is a schematic exploded view of a partial structure of a battery cell according to some other embodiments of this application; and
FIG. 6 is a schematic cross-sectional view of a partial structure of a battery cell according to some other embodiments of this application.

List of reference numerals: 10-battery cell; 100-housing; 110-first opening; 200-electrode assembly; 210-first tab; 220-second tab; 300-housing cover; 310-first through-hole; 320-groove; 321-bottom wall; 400-first insulation piece; 410-second through-hole; 500-electrode post; 510-body; 520-protruding portion; 530-recessed portion; 600-adapter piece; 610-third through-hole; 700-second insulation piece; X-direction of a central axis of the first through-hole.

### DETAILED DESCRIPTION

To make the objectives, technical solutions, and advantages of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion.

The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

With the development of the new energy industry, batteries gradually evolve toward a high energy density and a high power density. A battery cell is electrically connected to a load through an electrode post. The electrode post typically includes a main body and a protruding portion. The main body is disposed inside a shell of the battery cell, and the protruding portion runs through a through-hole in the shell of the battery cell to connect to the load. During the preparation of the battery cell, an electrolyte solution needs to be injected after an electrode assembly is mounted into the housing. However, if the housing cover is not mounted, the electrolyte solution is prone to splash out. Therefore, the housing cover and the housing are generally assembled to form a shell of the battery cell, and then the electrolyte solution is injected. Because the main body of the electrode post is disposed inside the shell of the battery cell, the electrode post needs to be mounted before the housing cover and the housing are assembled. After completion of assembling the shell of the battery cell and the electrode post, the space between the electrode post and the shell of the battery cell is in a sealed state, and an injection hole and an injection plug need to be additionally provided on the shell of the battery cell. In the internal space of the shell of the battery cell, space for injecting the electrolyte solution needs to be reserved at a position corresponding to the injection hole, thereby occupying the internal space of the shell of the battery cell and reducing the energy density of the battery cell. In addition, the injection plug protrudes from the shell of the battery cell, thereby increasing the space occupied by the shell of the battery cell and reducing the energy density of the battery cell.

To increase the energy density of the battery cell, this application provides a battery cell. The battery cell includes a housing, an electrode assembly, a housing cover, a first insulation piece, and an electrode post. The housing is provided with a first opening. The electrode assembly is accommodated in the housing. The electrode assembly includes a first tab and a second tab of opposite polarities. The housing cover is disposed at the first opening and connected to the housing. The housing cover is provided with a first through-hole. The first tab is electrically connected to the housing cover. The first through-hole is an injection hole. The first insulation piece is disposed on one side of the housing cover, the side facing away from the electrode assembly. The first insulation piece is provided with a second through-hole. The electrode post includes a body and a protruding portion. The body is sheet-shaped and disposed on one side of the first insulation piece, the side facing away from the housing cover. The protruding portion protrudes from one side of the body, the side facing the housing cover. The protruding portion runs through the first through-hole and the second through-hole and is electrically connected to a second tab.

In the battery cell of this structure, by disposing the first insulation piece on one side of the housing cover, the side facing away from the electrode assembly, this application implements insulation between the electrode post and the housing cover, and reduces the possibility of short-circuiting in the battery cell. By disposing the body of the electrode post on one side of the first insulation piece, the side facing away from the housing cover, this application enables the first through-hole of the housing cover to connect the interior and the exterior of the battery cell after the housing and the housing cover are assembled to form a shell of the battery cell. In this way, the first through-hole can be used as an injection hole for injecting an electrolyte solution. After completion of the injection, the electrode post can seal the first through-hole, so that the shell of the battery cell does not need to be provided with an additional injection hole, thereby saving space reserved for injection inside the shell of the battery cell. In addition, no injection plug is required, so that the overall space occupied by the battery cell is smaller, and the energy density of the battery cell is higher. By electrically connecting the first tab to the housing cover, this application enables the protruding portion of the electrode post to run through the first through-hole and the second through-hole and to get electrically connected to the second tab. In this way, a load can be electrically connected to the battery cell through the housing cover and the electrode post, thereby making it convenient for the battery cell to provide electrical energy for the load.

The battery cell provided in this embodiment of this application may be a secondary battery or a primary battery. For example, the battery cell may be a lithium-ion battery, a sodium-ion battery, a magnesium-ion battery, or the like. The type of the battery cell is not limited herein. The battery cell may be in various shapes such as cylindrical, flat, cuboidal or other shapes. The shape of the battery cell is not limited herein. The electrode assembly may be of a jelly-roll type structure or a stacked type structure. The structure of the electrode assembly is not limited herein.

An embodiment of this application provides an electrical device powered by a battery cell. The electrical device may be, but not limited to, a mobile phone, tablet, notebook computer, electric toy, electric tool, electric power cart, electric vehicle, ship, spacecraft, or the like.

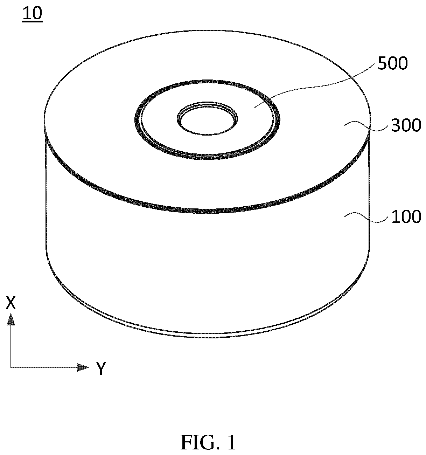

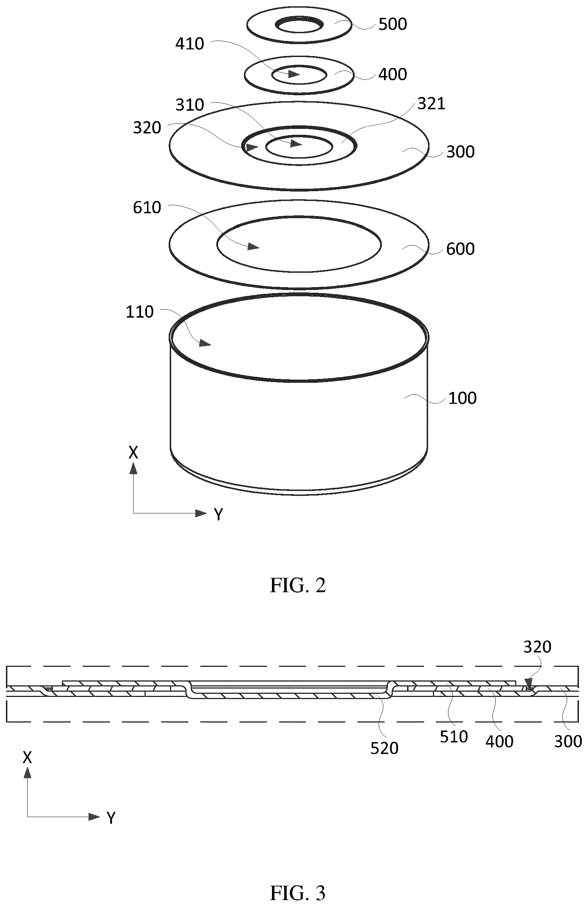

Referring to FIG. 1 and FIG. 2, FIG. 1 is a three-dimensional schematic structural diagram of a battery cell according to some embodiments of this application; and FIG. 2 is a schematic structural exploded view of a battery cell according to some embodiments of this application.

An embodiment of this application provides a battery cell 10. The battery cell 10 includes a housing 100, an electrode assembly 200, a housing cover 300, a first insulation piece 400, and an electrode post 500. The housing 100 is provided with a first opening 110. The electrode assembly 200 is accommodated in the housing 100. The electrode assembly 200 includes a first electrode tab 210 and a second tab 220 of opposite polarities, so that the electrode assembly 200 can be electrically connected to a load through the first tab 210 and the second tab 220.

The housing cover 300 is disposed at the first opening 110 and connected to the housing 100. The housing cover 300 is provided with a first through-hole 310. The first tab 210 is electrically connected to the housing cover 300. The first through-hole 310 is an injection hole.

The first insulation piece 400 is disposed on one side of the housing cover 300, the side facing away from the electrode assembly 200. The first insulation piece 400 is provided with a second through-hole 410.

By disposing the first insulation piece 400 on one side of the housing cover 300, the side facing away from the electrode assembly 200, this application can implement insulation between the electrode post 500 and the housing cover 300, thereby reducing the possibility of short-circuiting of the battery cell 10.

The electrode post 500 includes a body 510 and a protruding portion 520. The body 510 is sheet-shaped. The body 510 is disposed on one side of the first insulation piece 400, the side facing away from the housing cover 300. The protruding portion 520 protrudes from one side of the body 510, the side facing the housing cover 300. The protruding portion 520 runs through the first through-hole 310 and the second through-hole 410 and is electrically connected to the second tab 220.

By disposing the body 510 of the electrode post 500 on one side of the first insulation piece 400, the side facing away from the housing cover 300, this application enables the first through-hole 310 of the housing cover 300 to connect the interior and the exterior of the battery cell 10 after the housing 100 and the housing cover 300 are assembled to form a shell of the battery cell 10. In this way, the first through-hole 310 can be used as an injection hole for injecting an electrolyte solution. After completion of the injection, the electrode post 500 can seal the first through-hole 310, so that the shell of the battery cell 10 does not need to be provided with an additional injection hole, thereby saving space reserved for injection inside the shell of the battery cell 10. In addition, no injection plug is required, so that the overall space occupied by the battery cell 10 is smaller, and the energy density of the battery cell 10 is higher. By electrically connecting the first tab 210 to the housing cover 300, this application enables the protruding portion 520 of the electrode post 500 to run through the first through-hole 310 and the second through-hole 410 and to get electrically connected to the second tab 220. In this way, the load can be electrically connected to the battery cell 10 through the housing cover 300 and the electrode post 500, thereby making it convenient for the battery cell 10 to provide electrical energy for the load.

In some embodiments, the housing 100 and the housing cover 300 may be made of metal materials such as stainless steel and nickel, thereby enabling the housing 100 and the housing cover 300 to exhibit relatively high force-bearing performance, and reducing the possibility of deformation or damage of the housing 100 and the housing cover 300 caused by a force or an environmental change.

In some embodiments, the first insulation piece 400 may be made of a polypropylene material, thereby exerting a good insulation effect on the housing cover 300 and the electrode post 500 by the first insulation piece 400.

In some embodiments, the electrode post 500 may be made of materials such as aluminum and aluminum alloy, thereby improving the electrical conductivity of the electrode post 500 and facilitating electrical connection between the electrode post and the second tab 220.

In some embodiments, the melting point of the first insulation piece 400 is T, satisfying: 100 °C ≤ T ≤ 400 °C. For example, T may be 100 °C, 200 °C, or 400 °C. The first insulation piece 400 is meltable or debondable by heat to form a pressure relief channel connecting the interior and the exterior of the battery cell 10.

When T is greater than or equal to 100 °C, the insulation reliability of the first insulation piece 400 to the housing cover 300 and the electrode post 500 is made relatively high. When T is less than or equal to 400 °C, the first insulation piece 400 is meltable or debondable to form a pressure relief channel connecting the interior and the exterior of the battery cell 10 when the battery cell 10 is thermally runaway. In this way, the pressure relief sensitivity of the battery cell 10 is relatively high. Therefore, when T is 100 °C to 400 °C, not only the insulation reliability of the first insulation piece 400 to the housing cover 300 and the electrode post 500 is relatively high, but also the pressure relief sensitivity of the battery cell 10 is relatively high. The battery cell 10 is depressurized through the structure formed of the housing cover 300, the first insulation piece 400, and the electrode post 500. In this way, no additional pressure relief structure needs to be disposed on the shell of the battery cell, thereby reducing the difficulty and cost of preparing the battery cell 10.

Referring to FIG. 1 to FIG. 3, FIG. 3 is a schematic cross-sectional view of a partial structure of a battery cell according to some embodiments of this application.

In some embodiments, a groove 320 is formed on one side of the housing cover 300, the side facing away from the housing 100. The first through-hole 310 runs through the bottom wall 321 of the groove 320. At least a part of the first insulation piece 400 is disposed in the groove 320 along the direction X of the central axis of the first through-hole.

By disposing at least a part of the first insulation piece 400 in the groove 320 along the direction X of the central axis of the first through-hole, this application can reduce the overall thickness of the housing cover 300, the first insulation piece 400, and the electrode post 500, and implement ultra-thinness of the overall structure of the housing cover 300, the first insulation piece 400, and the electrode post 500, thereby reducing the overall space occupied by the housing cover 300, the first insulation piece 400, and the electrode post 500, and increasing the energy density of the battery cell 10.

In some embodiments, the first insulation piece 400 is disposed in the groove 320 along the direction X of the central axis of the first through-hole.

By disposing the first insulation piece 400 in the groove 320 along the direction X of the central axis of the first through-hole, this application can further reduce the overall thickness of the housing cover 300, the first insulation piece 400, and the electrode post 500, thereby further reducing the overall space occupied by the housing cover 300, the first insulation piece 400, and the electrode post 500, and further increasing the energy density of the battery cell 10.

In some embodiments, a groove 320 is formed on one side of the housing cover 300, the side facing away from the housing 100. The first through-hole 310 runs through the bottom wall 321 of the groove 320. At least a part of the body 510 is disposed in the groove 320 along the direction X of the central axis of the first through-hole.

By disposing at least a part of the body 510 in the groove 320 along the direction X of the central axis of the first through-hole, this application can further reduce the overall thickness of the housing cover 300, the first insulation piece 400, and the electrode post 500, thereby further reducing the overall space occupied by the housing cover 300, the first insulation piece 400, and the electrode post 500, and further increasing the energy density of the battery cell 10.

In some embodiments, the first insulation piece 400 is disposed in the groove 320 along the direction X of the central axis of the first through-hole.

By disposing the body 510 in the groove 320 along the direction X of the central axis of the first through-hole, this application can further reduce the overall thickness of the housing cover 300, the first insulation piece 400, and the electrode post 500, thereby further reducing the overall space occupied by the housing cover 300, the first insulation piece 400, and the electrode post 500, and further increasing the energy density of the battery cell 10. In addition, the electrode post 500 does not protrude from the housing cover 300, thereby reducing the possibility of interference between the electrode post 500 and other apparatuses.

In some embodiments, along the thickness direction of the housing cover 300, the projection of the first insulation piece 400 and the projection of the body 510 fall in the groove 320.

By making the projection of the first insulation piece 400 and the projection of the body 510 fall in the groove 320 along the thickness direction of the housing cover 300, this application can make the first insulation piece 400 or the body 510 as a whole be accommodated in the groove 320, and further reduce the overall thickness of the housing cover 300, the first insulation piece 400, and the electrode post 500, thereby further reducing the overall space occupied by the housing cover 300, the first insulation piece 400, and the electrode post 500, and further increasing the energy density of the battery cell 10.

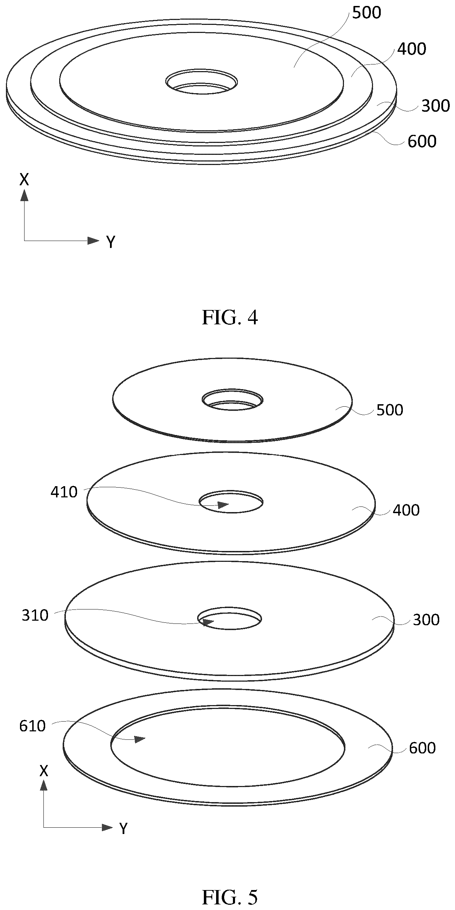

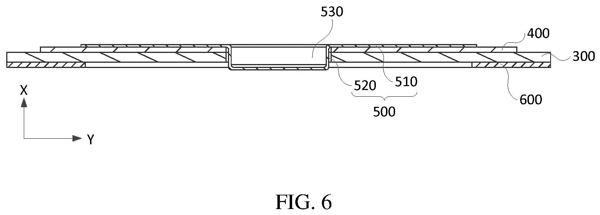

Referring to FIG. 4 to FIG. 6, FIG. 4 is a three-dimensional schematic diagram of a partial structure of a battery cell according to some other embodiments of this application; FIG. 5 is a schematic exploded view of a partial structure of a battery cell according to some other embodiments of this application; and FIG. 6 is a schematic cross-sectional view of a partial structure of a battery cell according to some other embodiments of this application.

In some other embodiments, the housing cover 300 is sheet-shaped. In other words, the housing cover 300 is not provided with a groove, and the housing cover 300, the first insulation piece 400, and the body 510 are stacked in sequence.

Referring to FIG. 1 to FIG. 6, in some embodiments, the diameter of the first through-hole 310 is D1, the diameter of the second through-hole 410 is D2, and the diameter of the protruding portion 520 is D3, satisfying: D1 > D3, and D2 ≥ D3. For example, D1 may be 1.1×D3, 1.2×D3, or 1.3×D3, and D2 may be D3, 1.1×D3, 1.2×D3, or the like.

By making the diameter D1 of the first through-hole 310, the diameter D2 of the second through-hole 410, and the diameter D3 of the protruding portion 520 satisfy D1 > D3 and D2 ≥ D3, this application enables the protruding portion 520 to run through the first through-hole 310 and the second through-hole 410 to get electrically connected to the second tab 220, and can reduce the possibility of short-circuiting caused by contact between the protruding portion 520 and the housing cover 300, thereby improving the safety of the battery cell 10.

In some embodiments, D1 > D2. For example, D1 may be 1.1×D2, 1.2×D2, 1.3×D2, or the like.

By making D1 greater than D2, this application can further reduce the possibility of short-circuiting caused by contact between the protruding portion 520 and the housing cover 300, thereby improving the safety of the battery cell 10.

In some other embodiments, the first insulation piece 400 may be provided with a flange (not shown in the drawing). The flange is disposed around the second through-hole 410, and extends toward the housing cover 300. In this way, the flange is located between the housing cover 300 and the electrode post 500 in a direction perpendicular to the thickness direction of the housing cover, thereby providing more reliable insulation for the housing cover 300 and the electrode post 500, reducing the possibility of short-circuiting between the electrode post 500 and the housing cover 300, and improving the safety of the battery cell 10.

In some embodiments, the first insulation piece 400 extends beyond the edge of the body 510 along a direction (such as the Y direction) perpendicular to the central axis of the first through-hole.

By making the first insulation piece 400 extend beyond the edge of the body 510 along the direction perpendicular to the central axis of the first through-hole, this application can more effectively implement insulation between the electrode post 500 and the housing cover 300, reduce the possibility of short-circuiting between the electrode post 500 and the housing cover 300, and improve the safety of the battery cell 10.

In some other embodiments, the edge of the first insulation piece 400 may be aligned with the edge of the body 500.

In some embodiments, the battery cell 10 further includes an adapter piece 600. The adapter piece 600 is disposed on one side of the housing cover 300, the side facing the electrode assembly 200. The outer periphery of the adapter piece 600 is connected to the housing 100. The adapter piece 600 is provided with a third through-hole 610. The protruding portion runs through the first through-hole 310, the second through-hole 410, and the third through-hole 610. The first tab 210 is electrically connected to the housing cover 300 by the adapter piece 600.

The outer periphery of the adapter piece 600 is connected to the housing 100. Therefore, after the adapter piece 600 is connected to the housing 100, the adapter piece 600 can cover a part of the first opening 110, and an electrolyte solution can be injected into the housing 100 through the third through-hole 610 of the adapter piece 600. The adapter piece 600 can reduce the possibility of the electrolyte solution splashing out of the housing 100. In addition, this arrangement facilitates the connection between the first tab 210 and the adapter piece 600, and enables the abutment between the adapter piece 600 and the housing cover 300 to implement electrical connection between the first tab 210 and the housing cover 300.

In some embodiments, the adapter piece 600 may be made of metal materials such as stainless steel and nickel, thereby facilitating the connection of the adapter piece 600 to the housing cover 300 and the first tab 210.

In some embodiments, the adapter piece 600 assumes an annular sheet shape.

By making the adapter piece 600 assume the annular sheet shape, this application facilitates the connection between the adapter piece 600 and the housing 100, and facilitates electrolyte injection into the housing 100 from the third through-hole 610 of the adapter piece 600.

In some other embodiments, an annular groove (not shown in the drawing) may be provided on one side of the housing cover 300, the side facing the housing 100. At least a part of the adapter piece 600 is disposed in the annular groove, thereby reducing the overall thickness of the housing cover 300, the first insulation piece 400, the electrode post 500, and the adapter piece 600, and in turn, further reducing the overall space occupied by the housing cover 300, the first insulation piece 400, the electrode post 500, and the adapter piece 600, and further increasing the energy density of the battery cell 10.

In some embodiments, the diameter of the third through-hole 610 is D4, satisfying: D4 > D1. For example, D4 may be 1.5×D3, 1.8×D3, or 2×D3.

By making the diameter D4 of the third through-hole 610 and the diameter D1 of the first through-hole 310 satisfy D4 > D1, this application facilitates the connection between the first tab 210 and the adapter piece 600 after the adapter piece 600 is mounted to the housing 100, and facilitates electrolyte injection into the housing 100 through the third through-hole 610.

In some embodiments, the battery cell 10 further includes a second insulation piece 700. At least a part of the second insulation piece 700 is disposed between the adapter piece 600 and the first tab 210.

By disposing the second insulation piece 700 and positioning at least a part of the second insulation piece 700 between the adapter piece 600 and the first tab 210, this application can reduce the possibility of contact and short-circuiting between the adapter piece 600 and the first tab 210, and improve the safety of the battery cell 10.

In some embodiments, along the thickness direction of the housing cover 300, the thickness of the protruding portion is H1, the thickness of the housing cover 300 is H2, the thickness of the first insulation piece 400 is H3, the thickness of the adapter piece 600 is H4, and the thickness of the second insulation piece 700 is H5, satisfying: H1 > H2 + H3 + H4 + H5. For example, H1 may be equal to H2+H3+H4+H5, 1.1×(H2+H3+H4+H5), 1.2×(H2+H3+H4+H5), or the like.

Because the first tab 210 is prone to deform, if the first tab 210 is made to pass through the adapter piece and the housing cover 300, the first tab 210 is prone to contact the adapter piece and the housing cover 300 to cause a short circuit, thereby increasing the risk of thermal runaway of the battery cell 10. By making the thickness H1 of the protruding portion, the thickness H2 of the housing cover 300, the thickness H3 of the first insulation piece 400, the thickness H4 of the adapter piece 600, and the thickness H5 of the second insulation piece 700 satisfy H1 ≥ H2 + H3 + H4 + H5 along the thickness direction of the housing cover 300, this application enables the protruding portion to pass through the housing cover 300, the first insulation piece 400, the adapter piece 600, and the second insulation piece 700, and to get connected to the first tab 210. In this way, the protruding portion is not prone to deform, thereby reducing the possibility of short-circuiting and thermal runaway of the battery cell 10, and improving the safety of the battery cell 10.

In some embodiments, the second insulation piece 700 may coat the first tab 210, and the thickness H5 of the second insulation piece 700 is the thickness of a single layer of second insulation piece 700.

In some embodiments, the second insulation piece 700 may be an insulation adhesive.

In some embodiments, the electrode assembly 200 further includes a main body. The first tab 210 and the second tab 220 are disposed on one side of the main body and connected to the main body, the side facing the housing cover 300.

With the first tab 210 and the second tab 220 positioned on the same side of the main body, a space just needs to be reserved between one side of the main body and the housing cover 300 to accommodate the first tab 210 and the second tab 220. Compared with the practice of disposing the first tab 210 and the second tab 220 on different sides, the technical solution hereof can reduce the space occupied by the first tab 210 and the second tab 220, and improve the utilization rate of the accommodation space formed by the housing 100 and the housing cover 300, thereby increasing the energy density of the battery cell 10. For a jelly-roll battery cell 10, after the electrode assembly 200 is mounted in the housing 100, a center pin needs to be passed through the middle of the battery cell 10 to connect the first tab 210 and the bottom wall 321 of the housing 100 together. In this application, both the first tab 210 and the second tab 220 are disposed on one side of the main body, the side facing the housing cover 300. Therefore, there is no need to reserve a space for accommodating the center pin, thereby further improving the utilization rate of the accommodation space formed by the housing 100 and the housing cover 300, and in turn, further increasing the energy density of the battery cell 10.

In some embodiments, a recessed portion 530 is formed on one side of the electrode post 500 at a position corresponding to the protruding portion 520, the side facing away from the housing cover 300.

By forming a recessed portion 530 on one side of the electrode post 500 at the position corresponding to the protruding portion 520, the side facing away from the housing cover 300, this application enables the protruding portion 520 of the electrode post 500 to be manufactured directly by stamping or other means, thereby improving the efficiency of preparing the battery cell 10.

In some other embodiments, on the side of the electrode post 500 facing away from the housing cover 300, the part corresponding to the protruding portion 520 may be a plane, and the protruding portion 520 may be formed on the body 510 in one piece or fixedly connected to the body 510 by welding, bonding, or other means.

In some embodiments, the first tab 210 is a negative tab, and the second tab 220 is a positive tab.

The first tab 210 is a negative tab, and the second tab 220 is a positive tab, so that the load can be electrically connected to the negative electrode of the electrode assembly 200 through the housing cover 300 or the housing 100, and electrically connected to the positive electrode of the electrode assembly 200 through the electrode post 500.

The housing 100 and the housing cover 300 constitute a shell of the battery cell, and form an accommodation space. The accommodation space accommodates the electrode assembly 200 and the electrolyte solution. The electrode assembly 200 includes a positive electrode plate, a negative electrode plate, and a separator. The battery cell 10 works primarily by shuttling metal ions between the positive electrode plate and the negative electrode plate. The positive electrode plate includes a positive current collector and a positive active material layer. A surface of the positive current collector is coated with the positive active material layer. A part, uncoated with the positive active material layer, of the positive current collector serves as a positive tab, so that the electrical energy of the positive electrode plate is input or output through the positive tab. Using a lithium-ion battery as an example, the positive current collector may be made of aluminum, and a positive active material may be lithium cobalt oxide, lithium iron phosphate, a ternary material, lithium manganese oxide, or the like. The negative electrode plate includes a negative current collector and a negative active material layer. A surface of the negative current collector is coated with the negative active material layer. A part, uncoated with the negative active material layer, of the negative current collector serves as a negative tab, so that the electrical energy of the negative electrode plate is input or output through the negative tab. The negative current collector may be made of copper, and the negative active material may be a carbon material, a silicon material, or the like. The separator may be made of polypropylene (PP), polyethylene (PE), or another material. The electrolyte solution may include an organic solvent, an electrolyte lithium salt, and the like.

In some embodiments, the housing cover 300 is circular, and the battery cell 10 is cylindrical.

The battery cell 10 being made cylindrical can be suitable for a cylindrical battery compartment that is smaller in size.

In some other embodiments, the battery cell 10 may be a special-shaped battery cell instead. For example, the shell of the battery cell may be a cuboid with a notch, and the electrode post 500 is disposed at the notch.

In a cuboidal battery cell, especially when the electrode post is disposed on one side of the battery cell, the side being the largest in area on the outer surface of the battery cell, recessing the housing cover to form a groove and disposing an adapter piece may lead to occupation of a relatively large internal space and reduce the energy density of the battery cell. However, disposing the electrode post at the notch and recessing the housing cover can make the occupied space relatively small. The energy density gained by eliminating the injection hole and the injection plug is greater than the energy density loss caused by the recessing of the housing cover, thereby increasing the energy density of the battery cell.

An embodiment of this application provides an electrical device. The electrical device includes the battery cell 10 disclosed in any one of the above technical solutions. The battery cell 10 is configured to provide electrical energy for the electrical device.

The electrical device may be any one of the above-mentioned devices or systems in which the battery cell 10 is applied.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery cell (10), **characterized in that** the battery cell (10) comprises:
a housing (100), provided with a first opening (110);
an electrode assembly (200), accommodated in the housing (100), wherein the electrode assembly (200) comprises a first tab (210) and a second tab (220) of opposite polarities;
a housing cover (300), disposed at the first opening (110) and connected to the housing (100), wherein the housing cover (300) is provided with a first through-hole (310), the first tab (210) is electrically connected to the housing cover (300), and the first through-hole (310) is an injection hole;
a first insulation piece (400) disposed on one side of the housing cover (300), the one side of the housing cover being a side facing away from the electrode assembly (200), and the first insulation piece (400) being provided with a second through-hole (410); and
an electrode post (500), comprising a body (510) and a protruding portion (520), wherein the body (510) is disposed on one side of the first insulation piece (400), the one side of the first insulation piece being a side facing away from the housing cover (300); the protruding portion (520) protrudes from one side of the body (510), the one side of the body being a side facing the housing (100) cover (300); and the protruding portion (520) runs through the first through-hole (310) and the second through-hole (410) and is electrically connected to the second tab (220).

2. The battery cell (10) according to claim 1, **characterized in that** a melting point of the first insulation piece (400) is T, 100 °C ≤ T ≤ 400 °C; and the first insulation piece (400) is configured to melt or debond by heat to form a pressure relief channel connecting an interior and an exterior of the battery cell (10).

3. The battery cell (10) according to claim 1, **characterized in that** a groove (320) is formed on the one side of the housing cover (300); the first through-hole (310) runs through a bottom wall (321) of the groove (320); and at least a part of the first insulation piece (400) is disposed in the groove (320) along a direction of a central axis of the first through-hole (X) .

4. The battery cell (10) according to claim 1, **characterized in that** a groove (320) is formed on the one side of the housing cover (300); the first through-hole (310) runs through a bottom wall (321) of the groove (320); and at least a part of the body (510) is disposed in the groove (320) along a direction of a central axis of the first through-hole (X) .

5. The battery cell (10) according to claim 3, **characterized in that**, along a thickness direction of the housing cover (300), a projection of the first insulation piece (400) and a projection of the body (510) fall in the groove (320).

6. The battery cell (10) according to claim 1, **characterized in that** a diameter of the first through-hole (310) is D1, a diameter of the second through-hole (410) is D2, and a diameter of the protruding portion (520) is D3, satisfying: D1 > D3, and D2 ≥ D3.

7. The battery cell (10) according to claim 6, **characterized in that** D1 > D2.

8. The battery cell (10) according to claim 1, **characterized in that** the first insulation piece (400) extends beyond an edge of the body (510) along a direction perpendicular to a central axis of the first through-hole (310).

9. The battery cell (10) according to claim 1, **characterized in that** the battery cell (10) further comprises an adapter piece (600), the adapter piece (600) is disposed on an other side of the housing (100) cover (300), the other side facing the electrode assembly; an outer periphery of the adapter piece (600) is connected to the housing (100); the adapter piece (600) is provided with a third through-hole (610); the protruding portion (520) runs through the first through-hole (310), the second through-hole (410), and the third through-hole (610); and the first tab (210) is electrically connected to the housing cover (300) by the adapter piece (600).

10. The battery cell (10) according to claim 9, **characterized in that** the body (510) is sheet-shaped, and the adapter piece (600) has an annular sheet shape.

11. The battery cell (10) according to claim 9, **characterized in that** the battery cell (10) further comprises a second insulation piece (700), at least a part of the second insulation piece (700) is disposed between the adapter piece (600) and the first tab (210); and
along a thickness direction of the housing cover (300), a thickness of the protruding portion (520) is H1, a thickness of the housing cover (300) is H2, a thickness of the first insulation piece (400) is H3, a thickness of the adapter piece (600) is H4, and a thickness of the second insulation piece (700) is H5, satisfying: H1 ≥ H2 + H3 + H4 + H5.

12. The battery cell (10) according to claim 1, **characterized in that** the electrode assembly (200) further comprises a main body (510), and the first tab (210) and the second tab (220) are disposed on one side of the main body (510) and connected to the main body (510), the one side of the main body being a side facing the housing cover (300).

13. The battery cell (10) according to claim 1, **characterized in that** a recessed portion (530) is formed on one side of the electrode post (500) at a position corresponding to the protruding portion (520), the one side of the main body being a side facing away from the housing cover (300).

14. The battery cell (10) according to claim 1, **characterized in that** the housing cover (300) is circular, and the battery cell (10) is cylindrical.

15. An electrical device, **characterized in that** the electrical device comprises the battery cell (10) according to any one of claims 1 to 14, and the battery cell (10) is configured to provide electrical energy.
